# EUROPEAN PATENT APPLICATION

(11) **EP 1 178 555 A2**
(43) Date of publication of application: **06.02.2002**
(21) Application number: 01117788.8
(22) Date of filing: 02.08.2001
(51) Int. Cl.: H01M 10/40, H01M 10/36

(54) **Lithium-sulfur batteries**

(30) Priority: 02.08.2000 KR 2000044900; 02.08.2000 KR 2000044901
(71) Applicant: Samsung SDI Co., Ltd., Suwon-Si, Kyungki-do (KR)
(72) Inventor: Jung, Yongju, Yuseong-ku, Taejeon-city (KR); Kim, Seok, Cheonan-city, Chungcheongnam-do (KR); Choi, Yunsuk, Cheonan-city, Chungcheongnam-do (KR); Choi, Soo Seok, Cheonan-city, Chungcheongnam-do (KR); Lee, Jeawoan, Cheonan-city, Chungcheongnam-do (KR); Hwang, Duck Chul, Cheonan-city, Chungcheongnam-do (KR); Kim, Joo Soak, Cheonan-city, Chungcheongnam-do (KR)
(74) Representative: Modiano, Guido, Dr.-Ing.

(57) **Abstract**

A lithium-sulfur battery includes a negative electrode, a positive electrode, and an electrolyte. The negative electrode includes a negative active material selected from materials in which lithium intercalation reversibly occur, lithium alloy or lithium metal. The positive electrode includes at least one of elemental sulfur and organosulfur compounds for a positive active material, and an electrically conductive material. The electrolyte includes at least two groups selected from a weak polar solvent group, a strong polar solvent group and a lithium protection solvent group, where the electrolyte includes at least one or more solvents selected from the same group. The electrolyte may optionally include one or more electrolyte salts.

## Description

### CROSS REFERENCE TO RELATED APPLICATIONS

This application is based on Korean patent application Nos. 00-44900 and 00-44901 filed in the Korean Industrial Property Office on August 2, 2000, the content of which are incorporated hereinto by reference.

### BACKGROUND OF THE INVENTION

### (a) Field of the Invention

The present invention relates to a lithium-sulfur battery, and more specifically, to a lithium-sulfur battery exhibiting high capacity and good rate capability.

### (b) Description of the Related Art

A lithium-sulfur secondary battery uses sulfur-based compounds with a sulfur-sulfur bond as a positive active material, and a lithium metal or carbon based compounds as a negative active material. The carbon-based compounds in which intercalation chemistry occurs, include graphite, graphite intercalation compounds, and carbonaceous materials, where the carbonaceous materials are inserted with the lithium. Upon discharge (electrochemical reduction), a sulfur-sulfur bond is broken and results in a decrease in the oxidation number of S. Upon recharging (electrochemical oxidation), a sulfur-sulfur bond is formed and leads to an increase in the oxidation number of S.

The organic compounds which are able to dissolve the polysulfide that is the reduction products of the positive active materials are used as electrolyte solvents in the above lithium-sulfur battery. The choice of electrolyte solvents is important to the lithium-sulfur battery performance.

U.S. Patent Nos. 5,523,179 (PolyPlus Battery Company, Inc.), 5,532,077 (PolyPlus Battery Company, Inc.), 5,789,108 (PolyPlus Battery Company, Inc.), and 5,814,420 (PolyPlus Battery Company, Inc.) describe that an organic liquid electrolyte is selected from sulfolane compounds, dimethyl sulfone compounds, dialkyl carbonate compounds, tetrahydrofuran compounds, propylene carbonate compounds, ethylene carbonate compounds, dimethyl carbonate compounds, butyrolactone compounds, N,N-methylpyrrolidone, tetramethylurea compounds, glymes compounds, ether compounds, crown ether compounds, dimethoxyethane compounds, dioxolane compounds and combinations thereof. In addition, U.S. Patent No. 5,814,420 (PolyPlus Battery Company, Inc.) describes a liquid state ionic conductor of a positive electrode that includes at least one of sulfolane, dimethyl sulfone, a dialkyl carbonate, tetrahydrofuran, propylene carbonate, ethylene carbonate, dimethyl carbonate, butyrolactone, N-methylpyrrolidone, tetramethylurea, glymes, ether, a crown ether, dimethoxyethane and dioxolane.

U.S. Patent No. 6,030,720 (PolyPlus Battery Company) describes a liquid electrolyte solvent that includes a main solvent having the general formula R₁(CH₂CH₂O)ₙR₂, where n ranges between 2 and 10, R₁ and R₂ are different or identical groups selected from alkyl, alkoxy, substituted alkyl, or substituted alkoxy groups, and also describes a liquid electrolyte solvent including a solvent having at least one of a crown ether, cryptand, and a donor solvent. Some electrolyte solvent include donor or acceptor solvents in addition to the above compound with an ethoxy repeating unit. The donor solvent is at least one of hexamethylphosphoric triamide, pyridine, N,N-diethylacetamide, N,N-diethylformamide, dimethylsulfoxide, tetramethylurea, N,N-dimethylacetamide, N,N-dimethylformamide, tributylphosphate, trimethylphosphate, N,N,N',N'-tetraethylsulfamide, tetramethylenediamine, tetramethylpropylenediamine, or pentamethyldiethylenetriamine.

WO 99/33131 (Moltech Company) describes that an electrolyte that comprises one or more electrolyte solvent selected from N-methylacetamide, acetonitrile, carbonate, sulfolane, sulfone, substituted pyrrolidone, dioxolane, glyme or siloxane.

The battery performances (e.g., capacity and rate capability) depend greatly on the composition of the electrolyte solvents. However, the specific composition or developing strategy of an optimal electrolyte (making a optimal electrolyte) which are necessary for the development of lithium-sulfur batteries of good performance, are not mentioned in the prior art.

### SUMMARY OF THE INVENTION

It is an object of the present invention to provide a lithium-sulfur battery having a high capacity and a good rate capability through methods of making an optimal electrolyte.

In order to realize the above and other objects, the present invention provides a lithium-sulfur battery including a negative electrode, a positive electrode and an electrolyte. The negative electrode includes active materials selected from materials in which lithium intercalation reversibly occurs, lithium alloy, and lithium metal. The positive electrode includes sulfur-based compounds for active material, and an electrically conductive material. The sulfur-based compounds include at least one of elemental sulfur, and organosulfur compounds. The electrolyte includes the mixed organic solvents, which include at least two groups selected from a weak polar solvent group, a strong polar solvent group, and a lithium protection solvent group. Some electrolytes include at least one or more solvents selected from the same group. The electrolyte include one or more electrolyte salts.

The terminology "weak polar solvent", as used herein, is defined as a solvent which is capable of dissolving elemental sulfur and has a dielectric coefficient of less than 15. The weak polar solvent is selected from aryl compounds, cyclic or noncyclic ether compounds or noncyclic carbonate compounds.

The terminology "strong polar solvent", as used herein, is defined as a solvent which is capable of dissolving lithium polysulfide and has a dielectric coefficient of more than 15. The strong polar solvent is selected from cyclic carbonate compounds, sulfoxide compounds, lactone compounds, ketone compounds, ester compounds, sulfate compounds or sulfite compounds.

The terminology "lithium protection solvent", as used herein, is defined as a solvent which forms a good protective layer, i.e. a stable solid-electrolyte interface (SEI) layer on lithium surface, and shows a good cyclic efficiency. The lithium protection solvent is selected from saturated ether compounds, unsaturated ether compounds, or heterocyclic compounds including N, O and S.

The positive electrode may optionally include at least one additive selected from transition metals, Group IIIA elements, Group IVA elements, sulfur compounds thereof, or alloys thereof.

When the lithium-sulfur battery is discharged, polysulfides (Sₙ⁻¹, Sₙ⁻², where, n ≥ 2) and sulfide (S⁻²) are formed by a reduction of sulfur in the positive electrode. Generally, the polysulfides are known to exist in a dissolved state in the electrolyte and the sulfide in a precipitated state. The solubility of elemental sulfur to the mixed organic solvents is preferably more than or equal to 0.5 mM. In order to prepare a battery with high capacity, the atomic sulfur concentration of polysulfide (Sₙ⁻¹, Sₙ⁻², where, n ≥ 2) produced in a fully discharged state is preferably at least 5 M.

### BRIEF DESCRIPTION OF THE DRAWINGS

These and other objects and advantages of the invention will become apparent and more readily appreciated from the following description of the preferred embodiments, taken in conjunction with the accompanying drawing of which

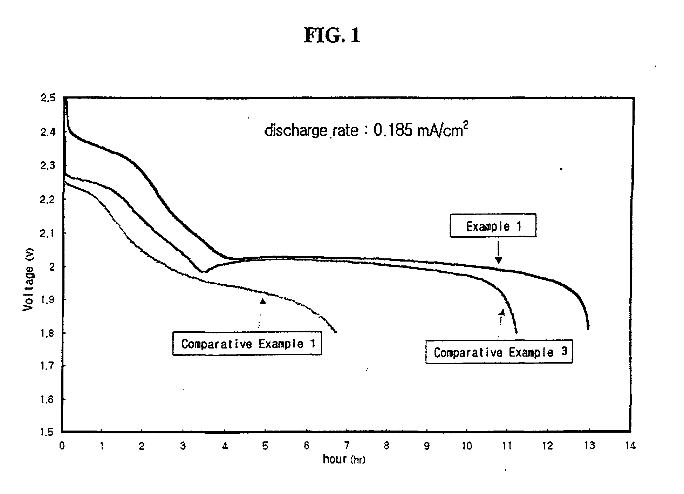

Fig. 1 shows discharge curves of lithium-sulfur battery fabricated by using electrolytes of Example 1, and Comparative examples 1 and 3.

### DETAILED DESCRIPTION OF THE INVENTION

The present invention provides a lithium-sulfur battery having a high capacity and a good rate capability. One of important factors related to the capacity of the lithium-sulfur battery is sulfur utilization, which depends dramatically on electrolytes. Therefore, the optimization of the composition of the electrolyte solvents is an important factor for the development of lithium-sulfur batteries having a high capacity. The rate capability of lithium-sulfur battery also depends greatly on the composition of the electrolyte solvents since the rate of the electrochemical reaction is directly related to the electrolyte solvents.

Levillain et al., J. Electroanal. Chem. Vol. **420,** pp 167-177, (1997), F. Gaillard et al., J. Electroanal. Chem. Vol. **432,** pp 129-138, (1997), E. Levillain et al., J. Electroanal. Chem. Vol. **440,** pp 243-250, (1997)] describe in detail that the electrochemical reaction of sulfur consists of various electrode reactions and various coupled chemical reactions. Poor reversibility and slow rate constant of the coupled chemical reaction lead to low sulfur utilization and poor rate capability since the chemical reactions are related directly to the electrode reactions.

Generally, oxidation numbers of sulfur in the polysulfides (Sₙ⁻¹, Sₙ⁻², where, n ≥ 1) which are reduction products of sulfur are more than 0 or less than -2. The terminology "oxidation number of sulfur", as used herein, is defined as the value of the ratio of charge to sulfur chain length. The polysulfides where an oxidation number of sulfur is near 0 are dissolved in a weak polar solvent, while the polysulfides where oxidation numbers of sulfur are less than or equal to -1 are dissolved in a strong polar solvent. Therefore, in order to dissolve polysulfide with various oxidation numbers, it is necessary to use mixed solvents including a weak polar solvent and a strong polar solvent as an electrolyte solvent.

The mixed organic solvents of the electrolyte of the present invention include at least two groups selected from a weak polar solvent group, a strong polar solvent group and a lithium protection solvent group. Some electrolytes include at least one or more solvents selected from the same group.

The terminology "weak polar solvent", as used herein, is defined as a solvent which is capable of dissolving elemental sulfur and has a dielectric coefficient of less than 15. The weak polar solvent is selected from an aryl compound, cyclic or noncyclic ether compounds or a noncyclic carbonate compound.

The terminology "strong polar solvent", as used herein, is defined as a solvent which is capable of dissolving lithium polysulfide and has a dielectric coefficient of more than 15. The strong polar solvent is selected from a cyclic carbonate compound, a sulfoxide compound, a lactone compound, a ketone compound, an ester compound, a sulfate compound or a sulfite compound.

The terminology "lithium protection solvent", as used herein, is defined as a solvent which form a good protective layer, (*i.e.* a stable solid-electrolyte interface (SEI) layer), on a lithium surface, and shows a good cyclic efficiency. The lithium protection solvent is selected from a saturated ether compound, an unsaturated ether compound, or a heterocyclic compound including N, O, and S.

Examples of the weak polar solvents include xylene, dimethoxyethane, 2-methyltetrahydrofurane, diethyl carbonate, dimethyl carbonate, toluene, dimethyl ether, diethyl ether, diglym or tetraglyme.

Examples of the strong polar solvents include hexamethyl phosphoric triamide, γ -butyrolactone, acetonitrile, ethylene carbonate, propylene carbonate, N-methyl pyrrolidone, 3-methyl-2-oxazolidone, dimethyl formamide, sulfolane, dimethyl acetamide, dimethyl sulfoxide, dimethyl sulfate, ethylene glycol diacetate, dimethyl sulfite, or ethylene glycol sulfite.

Examples of the lithium protection solvents include tetrahydrofuran, ethylene oxide, 1,3-dioxolane, 3,5-dimethylisoxazole, 2,5-dimethyl furane, furane, 2-methyl furane, 1,4-oxane and 4-methyldioxolane.

Examples of electrolyte salts which are optional for the battery according to the present invention include lithium trifluoromethane sulfonimide, lithium triflate, lithium perchlorate, LiPF₆ or LiBF₄, tetraalkylammonium salts (*e.g.* tetrabutylammonium tetafuloroborate (TBABF₄)), liquid state salts at room temprature (*e*.*g*. imidazolium salt such as 1-ethyl-3-methylimidazolium Bis-(perfluoroethyl sulfonyl) imide (EMIBeti)), or combinations thereof.

The positive electrode includes sulfur-based compounds for a positive active material, which include at least one of elemental sulfur, and organosulfur compounds. The positive electrode may optionally include at least one additive selected from transition metals, Group IIIA elements, Group IVA elements, sulfur compounds thereof, or alloys thereof. The transition metal includes Sc, Ti, V, Cr, Mn, Fe, Co, Ni, Cu, Zn, Y, Zr, Nb, Mo, Tc, Ru, Rh, Pd, Ag, Cd, Ta, W, Re, Os, Ir, Pt, Au and Hg. The Group IIIA elements include Al, Ga, In and TI. The Group IVA elements include Si, Ge, Sn and Pb.

The positive electrode includes electrically conductive materials that facilitate the movement of electrons within the positive electrode with sulfur-based compound or optionally include additives. Examples of the conductive material are not limited to these but include a conductive carbon material such as graphite, carbon black, a conductive polymer such as polyaniline, polythiopene, polyacetylene, or polypyrrol, or a combination thereof.

A binder may be added to enhance the mechanical integrity of the positive electrode, to improve mechanical and electrical contact at the solid-solid interface and/ or the solid/liquid interface, to increase electronic and/or ionic conduction throughout the positive electrode, and still further, to enhance the electrochemical redox reactions. Examples of the binder include poly(vinyl acetate), poly vinyl alcohol, polyethylene oxide, polyvinyl pyrrolidone, alkylated polyethylene oxide, cross linked polyethylene oxide, polyvinyl ether, poly(methyl methacrylate), polyvinylidene fluoride, copolymer of polyhexafluoropropylene and polyvinylidene fluoride (sold under the name Kynar® ), poly(ethyl acrylate), polytetrafluoro ethylene, polyvinyl chloride, polyacrylonitrile, polyvinylpyridine, polystyrene, derivatives thereof, blends thereof, and copolymers thereof.

A method of preparing a positive electrode will be illustrated in more detail. A binder is dissolved in a solvent and a conductive material is dispersed therein to obtain a dispersion solution. Any solvent may be used as long as it is capable of homogeneously dispersing a sulfur-based compound, the binder and the conductive material. Useful solvents include acetonitrile, methanol, ethanol, tetrahydrofurane, water, isopropyl alcohol, and dimethyl formamide. Then, a sulfur-based compound and, optionally, an additive, are homogeneously dispersed in the dispersion solution to prepare a positive electrode slurry. The slurry is coated on a current collector and the coated collector is dried to form a positive electrode. The current collector is not limited to, but is preferably made of a conductive material such as stainless steel, aluminum, copper or titanium. It is more preferable to use a carbon-coated aluminum current collector. The carbon-coated aluminum current collector has excellent adhesive properties for the coated layer including positive materials, exhibits a lower contact resistance, and inhibits corrosion by polysulfide as compared with a bare aluminum current collector.

The negative electrode includes a negative active material selected from materials in which lithium intercalation reversibly occurs, lithium alloy, or a lithium metal. The lithium alloy includes a lithium/ aluminum alloy, or a lithium/tin alloy.

The materials in which lithium intercalation reversibly occurs are carbon-based compounds. Any carbon materials may be used as long as it is capable of intercalating and deintercalating lithium ions. Examples of the carbon material include crystalline carbon, amorphous carbon, or mixture thereof.

Porosity of the positive electrode is a very important factor in determining the amount of impregnation of an electrolyte. If porosity is very low, discharging occurs locally, which causes a high concentration of lithium polysulfide and makes precipitation easily, which decreases the sulfur utilization. Meanwhile, if the porosity is very high, a slurry density becomes low so that it is difficult to prepare a battery with a high capacity. Preferably, the porosity of the positive electrode is at least 5% of the volume of the total positive electrode, more preferably at least 10%, and most preferably 15 to 65%.

Upon discharge of the lithium-sulfur battery of the present invention, polysulfides (Sₙ⁻¹, Sₙ⁻², wherein, n ≥ 2) or sulfide are formed by a reduction of the sulfur in the positive electrode. Generally, the polysulfides are known to exist in a dissolved state in the electrolyte and sulfide in a precipitated state. The solubility of elemental sulfur to the mixed organic solvent is preferably 0.5 mM or more. In order to prepare a battery with high capacity, the concentration of atomic sulfur of polysulfide (Sₙ⁻¹, Sₙ⁻², where, n ≥ 2) produced in fully discharged state is preferably at least 5 M.

Hereinafter, the present invention will be explained in detail with reference to examples. These examples, however, should not in any sense be interpreted as limiting the scope of the present invention.

### Example 1

20 % (percentage by weight) polyvinyl pyrrolidone as a binder and 20 % carbon black as a conductive material were added to a dimethylformamide solvent followed by the addition of 60 % elemental sulfur to prepare a slurry. The slurry was coated on a carbon-coated Al current collector. Then, the slurry-coated current collector was dried. The positive electrode and the vacuum dried separator were transferred into a glove box. The electrolyte of 1M LiSO₃CF₃ in dimethoxyethane/sulfolane/1,3-dioxolane (3:1:1 volume ratio) was placed on the positive electrode followed by placement of the separator. Traces of the electrolyte were then added on the separator. A lithium metal electrode as a negative electrode was placed on the separator, and then the lithium-sulfur cell was fabricated in a conventional manner.

### Example 2

A cell was fabricated by the same procedure as described in Example 1 except that an electrolyte of 1 M LiSO₃CF₃ in dimethoxyethane/sulfolane/1,3-dioxolane (2:2:1 volume ratio) was used.

### Example 3

A cell was fabricated by the same procedure as described in Example 1 except that an electrolyte of 1 M LiSO₃CF₃ in dimethoxyethane/sulfolane/dimethylsulfoxide/1,3-dioxolane (20:16:4:10 volume ratio) was used.

### Example 4

A cell was fabricated by the same procedure as described in Example 1 except that an electrolyte of 1 M LiSO₃CF₃ in dimethoxyethane/2-methyltetrahydrofurane/sulfolane/1,3-dioxolane (16:4:20:10 volume ratio) was used.

### Example 5

A cell was fabricated by the same procedure as described in Example 1 except that an electrolyte of 1 M LiSO₃CF₃ in dimethoxyethane/3,5-dimethylisoxazole/sulfolane/1,3-dioxolane (4:1:4:1 volume ratio) was used.

### Example 6

A cell was fabricated by the same procedure as described in Example 1 except that an electrolyte of 1 M LiSO₃CF₃ in 3,5-dimethylisoxazole/sulfolane/1,3-dioxolane (1:2:2 volume ratio) was used.

### Example 7

A cell was fabricated by the same procedure as described in Example 1 except that an electrolyte of 1 M LiSO₃CF₃ in dimethoxyethane/diglyme/sulfolane/1,3-dioxolane (2:2:1:5 volume ratio) was used and 3 % nickel powder based on the weight of the sulfur was further added to the slurry.

### Comparative Example 1

A cell was fabricated by the same procedure as described in Example 1 except that an electrolyte of 1 M LiSO₃CF₃ in dimethoxyethane was used.

### Comparative Example 2

A cell was fabricated by the same procedure as described in Example 1 except that an electrolyte of 1 M LiSO₃CF₃ in dimethoxyethane/xylene (4:1 volume ratio) was used.

### Comparative example 3

A cell was fabricated by the same procedure as described in Example 1 except that an electrolyte of 1 M LiSO₃CF₃ in dimethoxyethane/1,3-dioxolane (4:1 volume ratio) was used.

### Comparative example 4

A cell was fabricated by the same procedure as described in Example 1 except that an electrolyte of 1 M LiSO₃CF₃ in dimethoxyethane/diglyme/sulfolane/1,3-dioxolane (2:2:1:5 volume ratio) was used.

Sulfur utilization of the cells according to Examples 1 to 7 and Comparative examples 1 to 4 was evaluated at ambient temperature. Discharge current density was set to 0.185 mA/cm² and charge current density was set to 0.37 mA/cm². Discharge cut-off voltage was set to 1.5 V and charge capacity was set to 55% of theoretical capacity. In addition, sulfur utilization of Example 1 and Comparative example 3 at discharge current density of 0.925 mA/cm² and 1.85 mA/cm² were evaluated respectively. The result of sulfur utilization is presented in Table 1. The sulfur utilization is defined as the percent values of observed capacity to the theoretical capacity, *i.e*., 1675 mAh/g.

**Table 1**

| | Solvents of electrolyte | Discharging current density (mA/cm²) | Sulfur utilization (%) |
|---|---|---|---|
| Example 1 | dimethoxyethane/sulfolane/1,3-dioxolane (3:1:1) | 0.185 | 66 |
| Example 1 | dimethoxyethane/sulfolane/1,3-dioxolane (3:1:1) | 0.925 | 58 |
| Example 1 | dimethoxyethane/sulfolane/1,3-dioxolane (3:1:1) | 1.85 | 49 |
| Example 2 | dimethoxyethane/sulfolane/1,3-dioxolane (2:2:1) | 0.185 | 66 |
| Example 3 | dimethoxyethane/sulfolane/dimethylsulfoxid e/1,3-dioxolane (20:16:4:10) | 0.185 | 68 |
| Example 4 | dimethoxyethane/2-methyltetrahydrofurane/sulfolane/1,3-dioxolane (16:4:20:10) | 0.185 | 65 |
| Example 5 | dimethoxyethane/3,5-dimethylisoxazole/sulfolane/1,3-dioxolane (4:1:4:1) | 0.185 | 59 |
| Example 6 | 3,5-dimethylisoxazole/sulfolane/1,3-dioxolane (1:2:2) | 0.185 | 59 |
| Example 7 | dimethoxyethane/diglyme/sulfolane/1,3-dioxolane (2:2:1:5) | 0.185 | 61 |
| Comparative Example 1 | Dimethoxyethane | 0.185 | 34 |
| Comparative Example 2 | dimethoxyethane/xylene(4:1) | 0.185 | 12 |
| Comparative example 3 | dimethoxyethane/1,3-dioxolane (4:1) | 0.185 | 56 |
| Comparative example 3 | dimethoxyethane/1,3-dioxolane (4:1) | 0.925 | 43 |
| Comparative example 3 | dimethoxyethane/1,3-dioxolane (4:1) | 1.85 | 33 |
| Comparative example 4 | dimethoxyethane/diglyme/sulfolane/1,3-dioxolane (2:2:1:5) | 0.185 | 53 |

Sulfur utilization depends greatly on the composition of the electrolyte as shown in Table 1. As evident from Table 1, the Comparative examples 1 and 2 show that a solvent of a weak polar solvent group or two solvents of a weak solvent group have poor sulfur utilization compared with others. Meanwhile, the cells according to Examples 1 to 6 using at least two solvents selected from a weak polar solvent group, a strong solvent group and a lithium protection solvent group, have excellent sulfur utilization. Especially, when the discharging current density was increased to 1.85mA/cm², the sulfur utilization of Example 1 was higher than that of Comparative examples 1 or 2 at 0.185mA/cm².

Comparing Example 1 with Comparative example 3, the sulfur utilization of the mixed organic solvent including a weak polar solvent, a strong polar solvent, and a lithium protection solvent (Example 1), was higher than that of the mixed organic solvent including a weak polar solvent and lithium protection solvent (Comparative example 3). In addition, comparing Example 7 with Comparative example 4, the improvement of the sulfur utilization in the cells with Ni (Example 7) was observed.

Fig. 1 shows discharge curves of the cells according to Example 1, and Comparative examples 1 and 3 at 0.185mA/cm². It shows that the cell of Example 1 including a weak polar solvent, a strong polar solvent, and a lithium protection solvent has the highest discharging voltage, while the cell of Comparative example 1 including only a weak polar solvent has the lowest discharging voltage.

While the present invention has been described in detail with reference to the preferred embodiments, those skilled in the art will appreciate that various modifications and substitutions can be made thereto without departing from the spirit and scope of the present invention as set forth in the appended claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A lithium-sulfur battery comprising
a negative electrode including a negative active material selected from the group consisting of materials in which lithium intercalation reversibly occurs, lithium alloy, and a lithium metal;
a positive electrode including a positive active material comprising at least one sulfur-based compound selected from the group consisting of elemental sulfur, and organosulfur compounds, and an electrically conductive material; and
an electrolyte including electrolyte salts and mixed organic solvents;
wherein, the mixed organic solvents of the electrolyte comprise at least two different groups selected from a weak polar solvent group, which is capable of dissolving elemental sulfur, a strong polar solvent group, which is capable of dissolving lithium polysulfide and a lithium protection solvent group, which forms a good protective layer on a lithium surface, and
wherein the mixed organic solvents comprise at least one or more solvents selected from same group.

2. The lithium-sulfur battery according to claim 1, wherein the weak polar solvent is selected from the group consisting of aryl compounds, cyclic or noncyclic ether compounds, and noncyclic carbonate compounds, and has a dielectric coefficient of less than 15.

3. The lithium-sulfur battery according to claim 1, wherein the strong polar solvent is selected from the group consisting of cyclic carbonate compounds, sulfoxide compounds, lactone compounds, ketone compounds, ester compounds, sulfate compounds, and sulfite compounds, and has a dielectric coefficient of more than 15.

4. The lithium-sulfur battery according to claim 1, wherein the lithium protection solvent is selected from the group consisting of saturated ether compounds, unsaturated ether compounds, heterocyclic compounds including N, O and S.

5. The lithium-sulfur battery according to claim 2, wherein the weak polar solvent is at least one selected from the group consisting of xylene, dimethoxyethane, 2-methyltetrahydrofurane, diethyl carbonate, dimethyl carbonate, toluene, dimethyl ether, diethyl ether, diglyme and tetraglyme.

6. The lithium-sulfur battery according to claim 3, wherein the strong polar solvent is at least one selected from the group consisting of hexamethyl phosphoric triamide, γ -butyrolactone, acetonitrile, ethylene carbonate, propylene carbonate, N-methyl pyrrolidone, 3-methyl-2-oxazolidone, dimethyl formamide, sulfolane, dimethyl acetamide, dimethyl sulfoxide, dimethyl sulfate, ethylene glycol diacetate, dimethyl sulfite, and ethylene glycol sulfite.

7. The lithium-sulfur battery according to claim 4, wherein the lithium protection solvent is at least one selected from the group consisting of tetrahydro furan, ethylene oxide, dioxolane, 3,5-dimethylisoxazole, 2,5-dimethyl furane, furane, 2-methyl furane, 1,4-oxane and 4-methyldioxolane.

8. The lithium-sulfur battery according to claim 1, wherein the positive electrode further comprises at least one additive selected from transition metals, Group IIIA elements, Group IVA elements, sulfur compounds thereof, and alloys thereof.

9. The lithium-sulfur battery according to claim 8, wherein the transition metal is selected from the group consisting of Sc, Ti, V, Cr, Mn, Fe, Co, Ni, Cu, Zn, Y, Zr, Nb, Mo, Tc, Ru, Rh, Pd, Ag, Cd, Ta, W, Re, Os, Ir, Pt, Au and Hg.

10. The lithium-sulfur battery according to claim 8, wherein the Group IIIA elements are selected from the group consisting of Al, Ga, In and Tl and the Group IVA elements are selected from the group consisting of Si, Ge, Sn and Pb.

11. The lithium-sulfur battery according to claim 1, wherein the electrolyte salt is at least one selected from the group consisting of lithium trifluoromethane sulfonimide, lithium triflate, lithium perchlorate, LiPF₆, LiBF₄, tetraalkylammonium salts, and combination thereof.

12. The lithium-sulfur battery according to claim 1 wherein the mixed organic solvent further comprises a third group such that the mixed organic solvent comprises the weak polar solvent group, the strong polar solvent group, and the lithium protection solvent group.

13. An electrolyte for use in a lithium sulfur battery having electrodes, the electrolyte comprising:
a first solvent comprising one of
a weak polar solvent, which is being capable of dissolving polysulfides having an oxidation number of sulfur that is near 0,
a strong polar solvent, which is being capable of dissolving the polysulfides having an oxidation number of sulfur between 0 and -1, and
a lithium protection solvent, which forms a stable solid-electrolyte interface on a lithium surface of one of the electrodes, and
a second solvent comprising another one of the weak polar solvent, the strong polar solvent, and the lithium protection solvent such that the first and second solvents are different solvents.

14. The electrolyte according to claim 13, wherein the weak polar solvent is being capable of dissolving elemental sulfur, and the strong polar solvent is being capable of dissolving lithium polysulfide.

15. The electrolyte according to claim 13, wherein the weak polar solvent is selected from the group consisting of aryl compounds, cyclic or noncyclic ether compounds, and noncyclic carbonate compounds, and has a dielectric coefficient of less than 15.

16. The electrolyte according to claim 13, wherein the strong polar solvent is selected from the group consisting of cyclic carbonate compounds, sulfoxide compounds, lactone compounds, ketone compounds, ester compounds, sulfate compounds, and sulfite compounds, and has a dielectric coefficient of more than 15.

17. The electrolyte according to claim 13, wherein the lithium protection solvent is selected from the group consisting of saturated ether compounds, unsaturated ether compounds, heterocyclic compounds including N, O and S.

18. The electrolyte according to claim 15, wherein the weak polar solvent is at least one selected from the group consisting of xylene, dimethoxyethane, 2-methyltetrahydrofurane, diethyl carbonate, dimethyl carbonate, toluene, dimethyl ether, diethyl ether, diglyme and tetraglyme.

19. The electrolyte according to claim 16, wherein the strong polar solvent is at least one selected from the group consisting of hexamethyl phosphoric triamide, γ -butyrolactone, acetonitrile, ethylene carbonate, propylene carbonate, N-methyl pyrrolidone, 3-methyl-2-oxazolidone, dimethyl formamide, sulfolane, dimethyl acetamide, dimethyl sulfoxide, dimethyl sulfate, ethylene glycol diacetate, dimethyl sulfite, and ethylene glycol sulfite.

20. The electrolyte according to claim 17, wherein the lithium protection solvent is at least one selected from the group consisting of tetrahydro furan, ethylene oxide, dioxolane, 3,5-dimethylisoxazole, 2,5-dimethyl furane, furane, 2-methyl furane, 1,4-oxane and 4-methyldioxolane.

21. The electrolyte according to claim 13, further comprising a third solvent comprising a remaining one the weak polar solvent, the strong polar solvent, and the lithium protection solvent such that the first, second and third solvent are different solvents.

22. The electrolyte according to claim 13, further comprising a third solvent that is a solvent of a same group as one of the first and second solvents.

23. The electrolyte according to claim 21, further comprising a fourth solvent that is a solvent of a same group as one of the first, second, and third solvent.

24. A method of manufacturing a lithium-sulfur battery, comprising:
preparing a slurry comprising a conductive material, an organic binder and a sulfur-based compound;
coating the slurry on a current collector to form a positive electrode;
providing a negative electrode including a negative active material including one of a material in which lithium intercalation reversibly occurs, a lithium alloy, and a lithium metal;
providing an electrolyte comprising
a first solvent comprising one of a weak polar solvent, which is being capable of dissolving polysulfides having an oxidation number of sulfur that is near 0, a strong polar solvent, which is being capable of dissolving the polysulfides having an oxidation number of sulfur between 0 and -1, and a lithium protection solvent, which forms a stable solid-electrolyte interface on a lithium surface of one of the electrodes, and
a second solvent comprising another one of the weak polar solvent, the strong polar solvent, and the lithium protection solvent such that the first and second solvents are different solvents;
placing the electrolyte between the positive and negative electrodes using a separator to form the lithium-sulfur battery..

25. The method according to claim 24, wherein the positive electrode is formed to have a porosity of at least 5% of a volume of the positive electrode.

26. The method according to claim 24, wherein the positive electrode is formed to have a porosity is between 15% and 65% of a volume of the positive . electrode.
